# EUROPÄISCHE PATENTSCHRIFT

(11) **EP 2 608 333 B1**
(45) Veröffentlichungstag und Bekanntmachung des Hinweises auf die Patenterteilung: **23.09.2015**
(21) Anmeldenummer: 12008674.9
(22) Anmeldetag: 21.12.2012
(51) Int. Cl.: H02G 3/12

(54) **Leiste; Verfahren zur Herstellung einer Leiste**
Strip, method for producing a strip
Baguette, procédé de fabrication d'une baguette

(30) Priorität: 22.12.2011 DE 102011122376
(43) Veröffentlichungstag der Anmeldung: 26.06.2013
(73) Patentinhaber: Bachmann Technology GmbH & Co. KG, 70565 Stuttgart (DE)
(72) Erfinder: Thaler, Roland, 70567 Stuttgart (DE)
(74) Vertreter: Patentanwälte Schuster, Müller & Partner mbB

(56) Entgegenhaltungen:
- DE-U1- 20 313 161
- DE-U1-202011 005 478

## Beschreibung

### Stand der Technik

Die Erfindung geht aus von einer Leiste, nach der Gattung des Anspruchs 1, und einem Verfahren zur Herstellung einer Leiste, nach der Gattung des Anspruchs 11, wobei die Leiste mindestens eine Einbaueinheit (z.B. Steckdose, Kaltgeräteeinsatz, Schalter, Elektronikeinheit, Sicherungshalter odgl.) aufweist.

In der Offenlegungsschrift DE 103 07 353 A1 wird eine Stromzuführungseinheit beschrieben, die mehrere in einem Isolierprofil angeordnete Stromschienen aufweist. Die Stromschienen dienen dabei zur Kontaktierung der in der Stromzuführungseinheit vorhandenen Einbaueinheiten. Die Stromzuführungseinheit weist ein Profilgehäuse mit einem U-förmigen Querschnitt auf. Im Inneren des Profilgehäuses befinden sich Erhebungen, die zur Verbindung der Einbaueinheit mit der Stromzuführungseinheit mit einer an der Einbaueinheit angeordneten Nut korrespondieren. Nachteilig ist, dass schon ein leichtes Verkanten der Einbaueinheit dazu führt, dass die Schenkel des U-förmigen Querschnittes auseinandergedrückt werden, so dass ein Festsitzen der Einbaueinheiten nicht mehr sicher gestellt ist. Zusätzlich ist nachteilig zu bewerten, dass die Einbaueinheiten nacheinander von der Seite in das Steckdosenprofil eingeschoben werden müssen, so dass die für einen Zusammenbau der Stromzuführungseinheit benötigte Zeit abhängig von der Anzahl der einzuschiebenden Einbaueinheiten ist. Dieser Nachteil ist auch bei dem in der Gebrauchsmusterschrift DE 20 2011 005 478 U1 offenbarten Leitungsbrüstungskanalsystem gegeben.

Um ein seitliches Einschieben der Einbaueinheiten zu vermeiden, wird in der Gebrauchsmusterschrift DE 203 13 161 U1 ein Kanal für eine Leitungsführung und/oder eine Geräteeinbau vorgeschlagen, bei dem eine Einbaueinheit mittels Rastprofilen an dem Kanalprofil angeordnet werden kann. Nachteilig zu bewerten ist allerdings der hohe konstruktive Aufwand.

Aufgabe der Erfindung ist es somit die Nachteile des Standes der Technik zu überwinden, so dass eine einfach herzustellende Leiste zur Verfügung gestellt wird.

### Die Erfindung und ihre Vorteile

Die erfindungsgemäße Leiste, mit dem kennzeichnenden Merkmale des Anspruchs 1, und das erfindungsgemäße Verfahren zur Herstellung einer Leiste, mit den kennzeichnenden Merkmalen des Anspruchs 11, haben demgegenüber den Vorteil, dass die erfindungsgemäße Leiste, die mindestens eine Einbaueinheit und ein aus einer Unterseite, zwei Seitenwänden und zwei Stirnseiten bestehendes Profilgehäuse aufweist, in das die Einbaueinheit zumindest teilweise aufgenommen ist, wobei ein an einer Seitenwand angeordneter Rand einer der Einbaueinheit zugewandten Seite des Profilgehäuses eine Innenseite, eine Außenseite und eine an der der Unterseite am entferntesten angeordnete Stirnseite aufweist, wobei an der Einbaueinheit ein dem Profilgehäuse zugewandter Rand angeordnet ist, der einen äußeren, mit der Außenseite des Randes des Profilgehäuses in Wirkverbindung stehenden, Teil und einen inneren, mit der Innenseite des Randes des Profilgehäuses in Wirkverbindung stehenden, Teil aufweist und die Einbaueinheit die Stirnseite einer Seitenwand umgreift, so dass ein Auseinanderdrücken der Ränder des Profilgehäuses vermieden wird. Durch diese Profilgeometrie ist ein sicheres Verrasten der Einbaueinheiten von oben möglich, so dass die Einbaueinheiten von oben in das Profilgehäuse eingesteckt werden können. Der nicht mehr benötigte Anschraubsteg im Innenbereich des Profils ermöglicht ein gefahrloses Einführen auch komplizierter Elektronikeinheiten. Dadurch ergibt sich ein maximales Innenvolumen gegenüber den bisherigen Lösungen.

Nach einer vorteilhaften Ausgestaltung der erfindungsgemäßen Leiste weist der dem Profilgehäuse zugewandter Rand der Einbaueinheit mindestens eine Vertiefung zur mindestens teilweisen Aufnahme des Randes des Profilgehäuses auf.

Nach einer zusätzlichen vorteilhaften Ausgestaltung der erfindungsgemäßen Leiste weisen der innere Teil des Randes der Einbaueinheit an seiner der der Innenseite des Profilgehäuses zugewandten Seite und/oder die Innenseite des Randes des Profilgehäuses mindestens eine Erhebung auf.

Nach einer diesbezüglich vorteilhaften Ausgestaltung der erfindungsgemäßen Leiste ist die Erhebung ein Rasthaken.

Nach einer zusätzlichen vorteilhaften Ausgestaltung der erfindungsgemäßen Leiste weisen der innere Teil des Randes der Einbaueinheit an seiner der der Innenseite des Profilgehäuses zugewandten Seite und/oder die Innenseite des Randes des Profilgehäuses mindestens eine Vertiefung auf.

Nach einer diesbezüglich vorteilhaften Ausgestaltung der erfindungsgemäßen Leiste ist die Vertiefung eine Nut.

Nach einer zusätzlichen vorteilhaften Ausgestaltung der erfindungsgemäßen Leiste weist die Leiste eine durch eine Endkappe verschlossene Stirnseite auf.

Nach einer diesbezüglich vorteilhaften Ausgestaltung der erfindungsgemäßen Leiste ist die Endkappe durch eine Verrastung mit dem Profilgehäuse verbunden. Bevorzugt erlaubt ein gefräster Steg im Endbereich des Profilgehäuses zusätzlich die Endkappen werkzeuglos zu verrasten. Bei toleranzschwierigen Profillängen kann die Endkappe seitlich durch angebrachte Bohrungen auch ohne zu verrasten sicher befestigt werden.

Nach einer zusätzlichen vorteilhaften Ausgestaltung der erfindungsgemäßen Leiste ist die Einbaueinheit eine Steckdose, ein Schalter, eine Elektronikeinheit, einen Sicherungshalter, eine Abdeckung odgl..

Nach einer zusätzlichen vorteilhaften Ausgestaltung der erfindungsgemäßen Leiste ist die Leiste eine Steckdosenleiste, ein Schalterleiste, eine Power Distribution Unit (PDU) odgl..

Nach einer vorteilhaften Ausgestaltung des erfindungsgemäßen Verfahrens zur Herstellung einer Leiste, die mindestens zwei in einem Profilgehäuse untergebrachte Einbaueinheiten, die ggfls. elektrisch verbunden sind, aufweist, wobei in einem ersten Verfahrensschritt die Einbaueinheiten nebeneinander derart aufgereiht werden, dass ein elektrischer Anschluss einer Einbaueinheit für die elektrische Verbindung zugänglich ist, um nach der elektrischen Verbindung das Profilgehäuse zur Herstellung der Leiste über die Einbaueinheiten zu stülpen, wird das Profilgehäuse zur Herstellung der Leiste mit den Einbaueinheiten verrastet.

Nach einer zusätzlichen vorteilhaften Ausgestaltung des erfindungsgemäßen Verfahrens erfolgt die Verbindung des Profilgehäuses mit den Einbaueinheiten werkzeuglos.

Nach einer zusätzlichen vorteilhaften Ausgestaltung des erfindungsgemäßen Verfahrens ist die herzustellende Leiste eine Leiste nach einem der Ansprüche 1 bis 10.

Weitere Vorteile und vorteilhafte Ausgestaltungen der Erfindung sind der nachfolgenden Beschreibung, der Zeichnung und den Ansprüchen entnehmbar.

### Zeichnung

Ein Ausführungsbeispiel des Gegenstandes der Erfindung ist in der Zeichnung dargestellt und wird im Folgenden näher erläutert. Es zeigen:
- Fig. 1: eine Seitenansicht einer erfindungsgemäßen Leiste,
- Fig. 2: einen Querschnitt eines Profilgehäuses einer erfindungsgemäßen Leiste entlang der Linie G-G aus Fig. 1,
- Fig. 3: eine Schnittzeichnung der erfindungsgemäßen Leiste entlang der Linie A-A aus Fig. 1,
- Fig. 4: einen vergrößerten Ausschnitt F aus Fig. 3,
- Fig. 5: eine Aufsicht der erfindungsgemäßen Leiste gemäß Fig. 1,
- Fig. 6: eine Schnittzeichnung der erfindungsgemäßen Leiste entlang der Linie B-B aus Fig. 5,
- Fig. 7: eine Schnittzeichnung entlang der Linie D-D aus Fig. 6,
- Fig. 8: einen vergrößerten Ausschnitt E aus Fig. 7,
- Fig. 9: eine perspektivische Ansicht der erfindungsgemäßen Leiste gemäß Fig. 1,
- Fig. 10: einen vergrößerten Ausschnitt H aus Fig. 9 und
- Fig. 11: eine Endkappe.

### Beschreibung des Ausführungsbeispiels

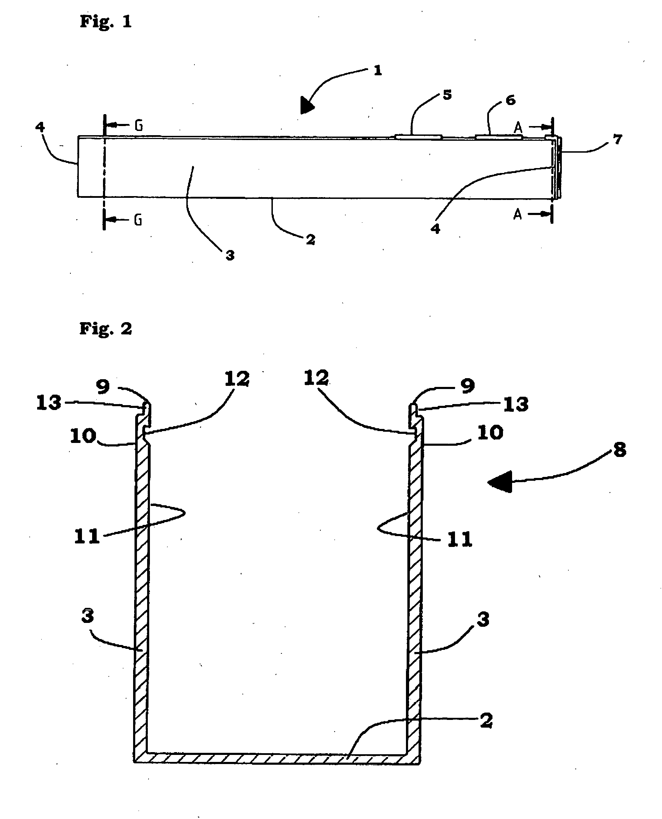

Fig. 1 zeigt eine Seitenansicht einer erfindungsgemäßen Leiste 1. Die Leiste 1 weist ein Profilgehäuse auf, das aus einer Unterseite 2, zwei Seitenwänden 3 und zwei Stirnseiten 4 besteht. Beispielhaft sind als Einbaueinheiten in der Leiste 1 eine Steckdose 5 und eine Abdeckung 6 angeordnet. Die Stirnseite 4 ist mit einer Endkappe 7 verschlossen.
Fig. 2 zeigt einen Querschnitt eines Profilgehäuses 8 einer erfindungsgemäßen Leiste entlang der Linie G-G aus Fig. 1. An einem Rand 9 der Seitenwände 3, der eine Außenseite 10 und eine Innenseite 11 aufweist, ist eine Vertiefung 12 angeordnet, in die die modularen Einbaueinheiten sicher verrasten. An dem Rand 9 der Seitenwand 3 befindet sich zudem zum sicheren Befestigen der Einbauelemente ein Gegenlager 13.

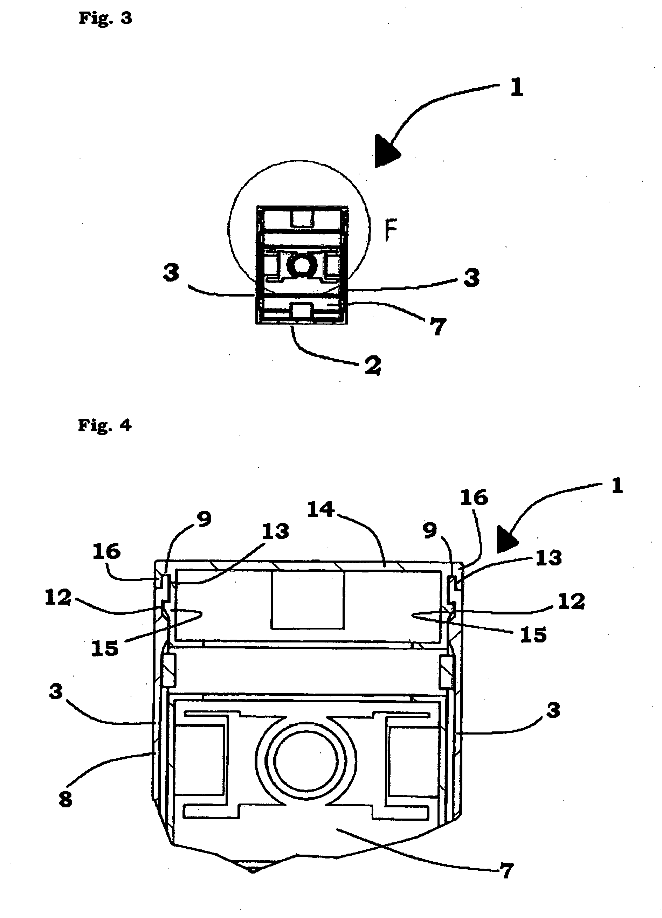

Fig. 3 zeigt eine Schnittzeichnung der erfindungsgemäßen Leiste 1 entlang der Linie A-A aus Fig. 1.
Fig. 4 zeigt einen vergrößerten Ausschnitt F aus Fig. 3. Dabei ist die Verbindung einer Einbaueinheit 14 mit dem Profilgehäuse 8 ersichtlich. Das Einbauelement 14 weist Rasthaken 15 und Gegenlager 16 auf, die mit den Vertiefungen 12 und den Gegenlagern 13 des Profilgehäuses 8 korrespondieren, so dass die Einbaueinheit 14 sicher in dem Profilgehäuse 8 verrastet werden können. Durch die Kombination von Rasthaken 15, Vertiefungen 12 und die Gegenlager 13 und 16 werden die Ränder 9 des Profilgehäuses 8 gegeneinander verspannt.

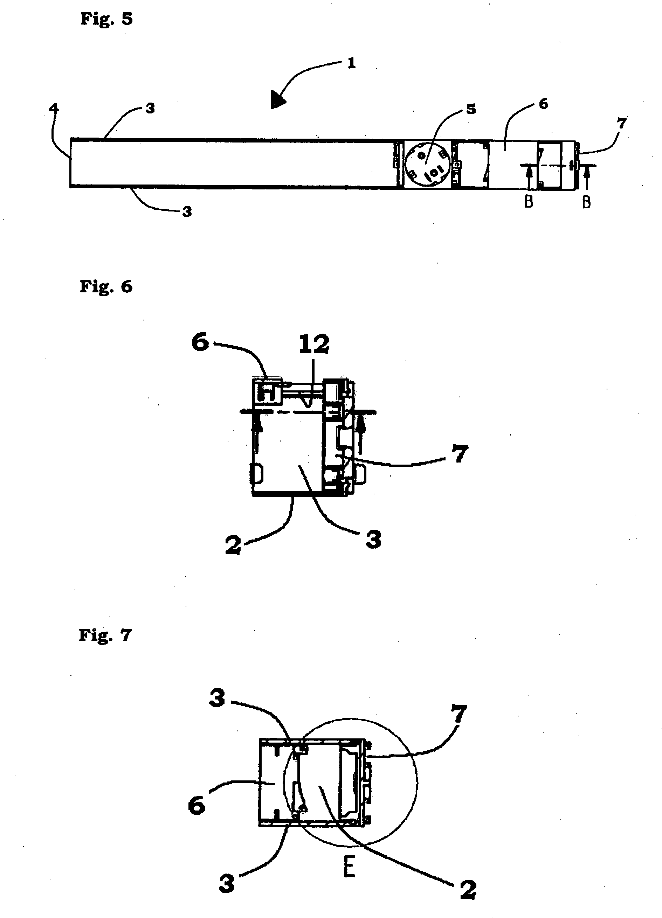

Fig. 5 zeigt eine Aufsicht der erfindungsgemäßen Leiste 1 gemäß Fig. 1. Die modulare Steckdosen 5 können verschiedene Länderausführungen aufweisen. Auch für die Abdeckungen 6 kann es unterschiedliche Längen und Ausführungen geben.
Fig. 6 zeigt eine Schnittzeichnung der erfindungsgemäßen Leiste entlang der Linie B-B aus Fig. 5.
Fig. 7 zeigt eine Schnittzeichnung entlang der Linie D-D aus Fig. 6.

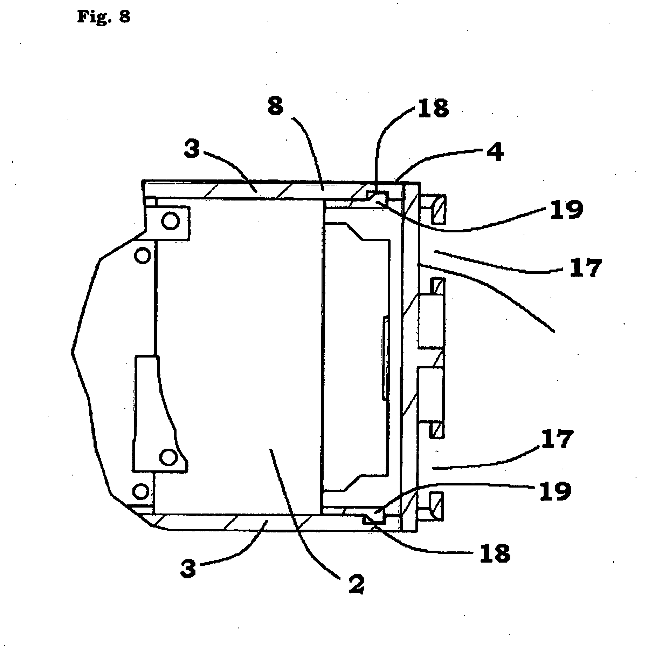

Fig. 8 zeigt einen vergrößerten Ausschnitt E aus Fig. 7. Die Endkappe 7 weist bevorzugt Führungen 17 auf, die zur Aufnahme eines nicht dargestellten Montagewinkel (Anschraubwinkel), wie er z.B. in IT Racks Verwendung findet, dienen, wodurch die Leiste werkzeuglos in einem IT Rack befestigt werden. An der Stirnseite 4 befindet sich eine gefräste Profilnut 18, in die ein Rasthaken 19 der Endkappe 7 verrastbar ist, um dadurch die Endkappe 7 mit dem Profilgehäuse 8 zu verbinden, wodurch sich ein Verschrauben der Endkappe 7 erübrigt.

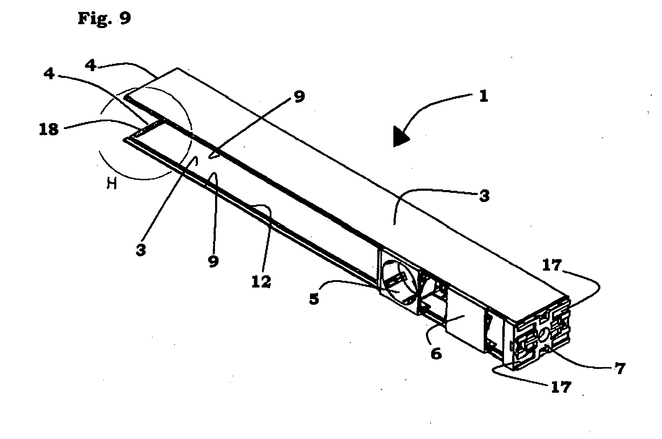

Fig. 9 zeigt eine perspektivische Ansicht der erfindungsgemäßen Leiste 1 gemäß Fig. 1. Dieses System bietet den Vorteil, dass die Einbaueinheiten auf dem Kopf liegend beispielsweise schon verdrahtet werden können, um anschließend das Profilgehäuse 8 einfach überzustülpen, bis die Verrastung erfolgt. Somit beinhaltet die Erfindung auch ein Verfahren zur Herstellung einer Leiste (z.B. Power Distribution Unit (PDU)).

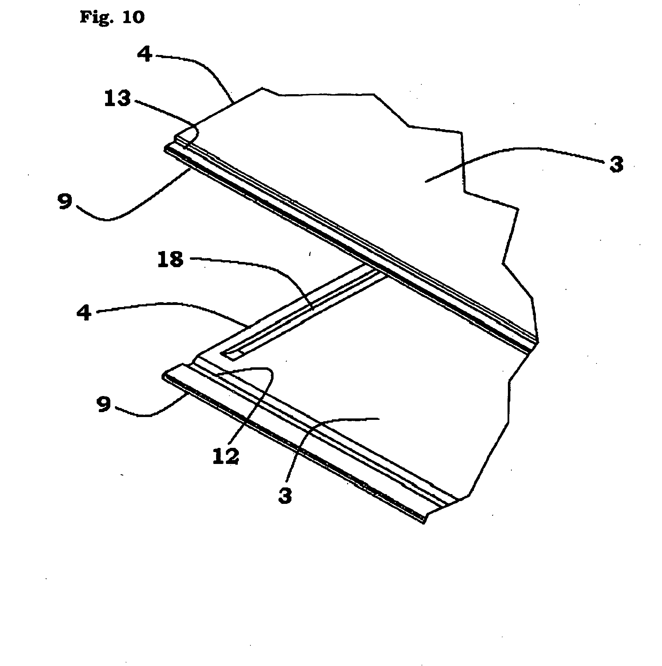

Fig. 10 zeigt einen vergrößerten Ausschnitt H aus Fig. 9.

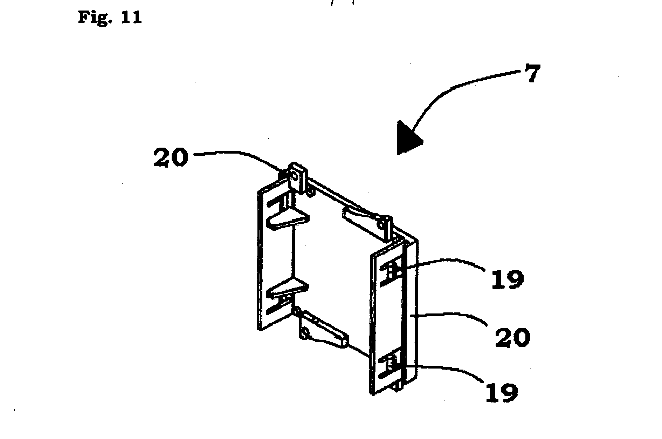

Fig. 11 zeigt eine Endkappe 7 mit ihren Rasthaken 19 und Gegenlagern 20.

Alle hier dargestellten Merkmale können sowohl einzeln als auch in beliebiger Kombination miteinander erfindungswesentlich sein.

### Bezugszahlenliste

- 1: Leiste
- 2: Unterseite
- 3: Seitenwand
- 4: Stirnseite
- 5: Steckdose
- 6: Abdeckung
- 7: Endkappe
- 8: Profilgehäuse
- 9: Rand
- 10: Außenseite
- 11: Innenseite
- 12: Vertiefung
- 13: Gegenlager
- 14: Einbaueinheit
- 15: Rasthaken
- 16: Gegenlager
- 17: Führung
- 18: Profilnut
- 19: Rasthaken
- 20: Gegenlager

## Patentansprüche

1. Leiste (1),
- mit mindestens einer Einbaueinheit (14) und
- mit einem aus einer Unterseite (2), zwei Seitenwänden (3) und zwei Stirnseiten (4) bestehenden Profilgehäuse (8), in das die Einbaueinheit (14) zumindest teilweise aufgenommen ist, wobei ein an einer Seitenwand (3) angeordneter Rand (9) einer der Einbaueinheit (14) zugewandten Seite des Profilgehäuses (8) eine Innenseite (11), eine Außenseite (10) und eine an der der Unterseite (2) am entferntesten angeordnete Stirnseite aufweist,
**dadurch gekennzeichnet,**
**dass** an der Einbaueinheit (14) ein dem Profilgehäuse (8) zugewandter Rand angeordnet ist, der einen äußeren, mit der Außenseite (10) des Randes (9) des Profilgehäuses (8) in Wirkverbindung stehenden, Teil und einen inneren, mit der Innenseite des Randes (9) des Profilgehäuses (8) in Wirkverbindung stehenden, Teil aufweist, wobei die Einbaueinheit (14) die Stirnseite einer Seitenwand (3) umgreift.

2. Leiste (1), nach Anspruch 1,
**dadurch gekennzeichnet,**
**dass** der dem Profilgehäuse (8) zugewandter Rand der Einbaueinheit (14) mindestens eine Vertiefung zur mindestens teilweisen Aufnahme des Randes (9) des Profilgehäuses (8) aufweist.

3. Leiste (1), nach Anspruch 1 oder Anspruch 2,
**dadurch gekennzeichnet,**
**dass** der innere Teil des Randes der Einbaueinheit (14) an seiner der der Innenseite (11) des Profilgehäuses (8) zugewandten Seite und/oder die Innenseite (11) des Randes (9) des Profilgehäuses mindestens eine Erhebung aufweisen.

4. Leiste (1), nach Anspruch 3,
**dadurch gekennzeichnet,**
**dass** die Erhebung ein Rasthaken (15) ist.

5. Leiste (1), nach einem der vorhergehenden Ansprüche,
**dadurch gekennzeichnet,**
**dass** der innere Teil des Randes der Einbaueinheit (14) an seiner der der Innenseite (11) des Profilgehäuses (8) zugewandten Seite und/oder die Innenseite (11) des Randes (9) des Profilgehäuses (8) mindestens eine Vertiefung (12) aufweisen.

6. Leiste (1), nach Anspruch 5,
**dadurch gekennzeichnet,**
**dass** die Vertiefung (12) eine Nut ist.

7. Leiste (1), nach einem der vorhergehenden Ansprüche,
**dadurch gekennzeichnet,**
**dass** die Leiste (1) eine durch eine Endkappe (7) verschlossene Stirnseite (4) aufweist.

8. Leiste (1), nach Anspruch 7,
**dadurch gekennzeichnet,**
**dass** die Endkappe (7) durch eine Verrastung mit dem Profilgehäuse (8) verbunden ist.

9. Leiste (1), nach einem der vorhergehenden Ansprüche,
**dadurch gekennzeichnet,**
**dass** die Einbaueinheit (14) eine Steckdose (5), ein Schalter, eine Elektronikeinheit, einen Sicherungshalter, eine Abdeckung (6) odgl. ist.

10. Leiste (1), nach einem der vorhergehenden Ansprüche,
**dadurch gekennzeichnet,**
**dass** die Leiste (1) eine Steckdosenleiste, ein Schalterleiste, eine Power Distribution Unit odgl. ist.

11. Verfahren zur Herstellung einer Leiste (1), die mindestens zwei in einem Profilgehäuse (8) untergebrachte Einbaueinheiten (14), die ggfls. elektrisch verbunden sind, aufweist, wobei das Profilgehäuse (8) aus einer Unterseite (2), zwei Seitenwänden (3) mit jeweils einer an der der Unterseite (2) am entferntesten angeordneten Stirnseite, und zwei Stirnseiten (4) besteht,
**dadurch gekennzeichnet,**
**dass** in einem ersten Verfahrensschritt die Einbaueinheiten (14) nebeneinander derart aufgereiht werden, dass ein elektrischer Anschluss einer Einbaueinheit (14) für die elektrische Verbindung zugänglich ist, um nach der elektrischen Verbindung das Profilgehäuse (8) zur Herstellung der Leiste (1) über die Einbaueinheiten (14) zu stülpen, wodurch die Einbaueinheit (14) die Stirnseiten der jeweiligen Seitenwände (3) umgreift.

12. Verfahren, nach Anspruch 11,
**dadurch gekennzeichnet,**
**dass** das Profilgehäuse zur Herstellung der Leiste mit den Einbaueinheiten verrastet.

13. Verfahren, nach Anspruch 11 oder Anspruch 12,
**dadurch gekennzeichnet,**
**dass** die Verbindung des Profilgehäuses mit den Einbaueinheiten werkzeuglos erfolgt.

14. Verfahren, nach einem der Ansprüche 11 bis 13,
**dadurch gekennzeichnet,**
**dass** die herzustellende Leiste eine Leiste nach einem der Ansprüche 1 bis 10 ist.

## Claims

1. A strip (1),
- comprising at least one assembly unit (14) and
- comprising a profile housing (8), which is composed of a bottom side (2), two side walls (3) and two front sides (4), and in which the assembly unit (14) is accommodated at least partially, wherein an edge (9), which is arranged on a side wall (3), of a side of the profile housing (8), which faces the assembly unit (14), has an inner side (11), an outer side (10) and a front side, which is arranged farthest away from the bottom side (2),
**characterized in**
**that** an edge, which faces the profile housing (8) and which has an outer part, which is in operative connection with the outer side (10) of the edge (9) of the profile housing (8), and an inner part, which is in operative connection with the inner side of the edge (9) of the profile housing (8), is arranged on the assembly unit (14), wherein the assembly unit (14) encompasses the front side of a side wall (3).

2. The strip (1) according to claim 1, **characterized in that** the edge of the assembly unit (14) facing the profile housing (8) has at least one depression for at least partially accommodating the edge (9) of the profile housing (8).

3. The strip (1) according to claim 1 or claim 2, **characterized in that**, on its side, which faces the inner side (11) of the profile housing (8), the inner part of the edge of the assembly unit (14) and/or the inner side (11) of the edge (9) of the profile housing have at least one elevation.

4. The strip (1) according to claim 3, **characterized in that** the elevation is an engagement hook (15).

5. The strip (1) according to one of the preceding claims, **characterized in that**, on its side, which faces the inner side (11) of the profile housing (8), the inner part of the edge of the assembly unit (14) and/or the inner side (11) of the edge (9) of the profile housing (8) have at least one depression (12).

6. The strip (1) according to claim 5, **characterized in that** the depression (12) is a groove.

7. The strip (1) according to one of the preceding claims, **characterized in that** the strip (1) has a front side (4), which is closed by means of an end cap (7).

8. The strip (1) according to claim 7, **characterized in that** the end cap (7) is connected to the profile housing (8) by means of a catch mechanism.

9. The strip (1) according to one of the preceding claims, **characterized in that** the assembly unit (14) is a socket (5), a switch, an electronic unit, a fuse holder, a cover (6) or the like.

10. The strip (1) according to one of the preceding claims, **characterized in that** the strip (1) is a multiple socket outlet, a switch panel, a power distribution unit or the like.

11. A method for producing a strip (1), which has at least two assembly units (14) accommodated in a profile housing (8), which are connected electrically, if applicable, wherein the profile housing (8) is composed of a bottom side (2), two side walls (3) in each case comprising a front side, which is arranged farthest away from the bottom side (2), and two front sides (4),
**characterized in that**
in a first method step, the assembly units (14) are lined up next to one another such that an electrical connection of an assembly unit (14) can be accessed for the electrical connection, so as to put the profile housing (8) over the assembly units (14) after the electrical connection so as to produce the strip (1), whereby the assembly unit (14) encompasses the front sides of the respective side walls (3).

12. The method according to claim 11, **characterized in that** the profile housing locks in place with the assembly units for producing the strip.

13. The method according to claim 11 or claim 12, **characterized in that** the connection of the profile housing to the assembly units takes place without tools.

14. The method according to one of claims 11 to 13, **characterized in that** the strip, which is to be produced, is a strip according to one of claims 1 to 10.

## Revendications

1. Barre conductrice (1),
- avec au moins une unité de montage (14) et
- avec un boîtier profilé (8) constitué d'une face inférieure (2), de deux parois latérales (3) et de deux faces frontales (4), dans lequel l'unité de montage (14) est logée au moins en partie, un bord (9) placé sur une paroi latérale (3) d'une face du boîtier profilé (8) dirigée vers l'unité de montage (14) comportant une face intérieure (11), une face extérieure (10) et une face frontale placée le plus loin sur la face inférieure (2),
**caractérisée en ce que**
sur l'unité de montage (14) est placé un bord dirigé vers le boîtier profilé (8) qui comporte une partie extérieure, qui est en liaison active avec la face extérieure (10) du bord (9) du boîtier profilé (8) et une partie intérieure, qui est en liaison active avec la face intérieure du bord (9) du boîtier profilé (8), l'unité de montage (14) entourant la face frontale d'une paroi latérale (3).

2. Barre conductrice (1) selon la revendication 1, **caractérisée en ce que** le bord de l'unité de montage (14) qui est dirigé vers le boîtier profilé (8) comporte au moins un creux pour le logement au moins partiel du bord (9) du boîtier profilé (8).

3. Barre conductrice (1) selon la revendication 1 ou la revendication 2, **caractérisée en ce que** la partie intérieure du bord de l'unité de montage (14) comporte sur sa face dirigée vers la face intérieure (11) du boîtier profilé (8) et/ou la face intérieure (11) du bord (9) du boîtier profilé comportent au moins une élévation.

4. Barre conductrice (1) selon la revendication 3, **caractérisée en ce que** l'élévation est un crochet d'enclenchement (15).

5. Barre conductrice (1) selon l'une quelconque des revendications précédentes, **caractérisée en ce que** sur sa face dirigée vers la face intérieure (11) du boîtier profilé (8), la partie intérieure du bord de l'unité de montage (14) et/ou la face intérieure (11) du bord (9) du boîtier profilé (8) comportent au moins un creux (12).

6. Barre conductrice (1) selon la revendication 5, **caractérisée en ce que** le creux (12) est une rainure.

7. Barre conductrice (1) selon l'une quelconque des revendications précédentes, **caractérisée en ce que** la barre conductrice (1) comporte une face frontale (4) fermée par un capuchon d'extrémité (7).

8. Barre conductrice (1) selon la revendication 7, **caractérisée en ce que** le capuchon d'extrémité (7) est relié au boîtier profilé (8) par un enclenchement.

9. Barre conductrice (1) selon l'une quelconque des revendications précédentes, **caractérisée en ce que** l'unité de montage (14) est une prise de courant (5), un commutateur, une unité électronique, un coupe-circuit, un recouvrement (6) ou similaire.

10. Barre conductrice (1) selon l'une quelconque des revendications précédentes, **caractérisée en ce que** la barre conductrice (1) est un bloc multiprises, une réglette de connexion, une unité de distribution de l'alimentation ou similaire.

11. Procédé destiné à fabriquer une barre conductrice (1) qui comporte au moins deux unités de montage (14) logées dans un boîtier profilé (8), qui le cas échéant sont électriquement reliées, le boîtier profilé (8) étant constitué d'une face inférieure (2), de deux parois latérales (3) avec chacune une face frontale placée le plus loin sur la face inférieure (2) et deux faces frontales (4)
**caractérisé en ce que**
dans une première étape de procédé, on aligne les unités de montage (14) l'une à côté de l'autre de telle sorte qu'une connexion électrique d'une unité de montage (14) soit accessible pour la liaison, pour retourner le boîtier profilé (8) par-dessus les unités de montage (14), après la liaison électrique, pour fabriquer la barre conductrice (1), suite à quoi, l'unité de montage (14) entoure les faces frontales des parois latérales (3) concernées.

12. Procédé selon la revendication 11, **caractérisé en ce que** pour fabriquer la barre conductrice, le boîtier profilé s'enclenche avec les unités de montage.

13. Procédé selon la revendication 11 ou la revendication 12, **caractérisé en ce que** la liaison du boîtier profilé avec les unités de montage s'effectue sans outil.

14. Procédé selon l'une quelconque des revendications 11 à 13, **caractérisé en ce que** la barre conductrice qui doit être fabriquée est une barre conductrice selon l'une quelconque des revendications 1 à 10.
